# EUROPÄISCHE PATENTSCHRIFT

(11) **EP 1 210 998 B1**
(45) Veröffentlichungstag und Bekanntmachung des Hinweises auf die Patenterteilung: **21.07.2004**
(21) Anmeldenummer: 01128608.5
(22) Anmeldetag: 30.11.2001
(51) Int. Cl.: B21D 47/01, B21C 37/06, B23K 26/24, B23K 26/08, B21D 47/04, B21D 5/08, B21C 37/08

(54) **Verfahren und Vorrichtung zum Herstellen eines Metallprofils**
Process and device for manufacturing a metallic profile
Procédé et dispositif pour la fabrication d'un profil métallique

(30) Priorität: 01.12.2000 DE 10060065; 01.12.2000 DE 10060066
(43) Veröffentlichungstag der Anmeldung: 05.06.2002
(73) Patentinhaber: Dreistern-Werk Maschinenbau GmbH & Co. KG, 79650 Schopfheim (DE)
(72) Erfinder:
(74) Vertreter: Kaiser, Magnus, Dipl.-Phys.

(56) Entgegenhaltungen:
- WO-A-00/29138
- DE-A- 3 343 709
- FR-A- 1 401 582
- US-A- 3 234 704
- PATENT ABSTRACTS OF JAPAN vol. 017, no. 503 (M-1478), 10. September 1993 (1993-09-10) & JP 05 131285 A (SUMITOMO METAL IND LTD), 28. Mai 1993 (1993-05-28)

## Beschreibung

Die Erfindung betrifft ein Verfahren zum Herstellen eines Metallprofils, bei dem ein Blechband mittels einer Mehrzahl von angetriebenen oder freilaufenden Rollformwerkzeugen zu einem ersten Profil umgeformt wird, sowie eine Vorrichtung zur Durchführung dieses Verfahrens gemäß dem Oberbegriffs des Anspruchs 9 (siehe z.B. FR-A-1 401 582).

Verfahren und Vorrichtungen dieser Art sind seit langem bekannt. Je nach Anzahl der Rollformwerkzeuge können aus einfachen Blechbändern zum Teil sehr komplexe Profilformen erzielt werden. Allerdings steigt mit der Komplexität der Profilformen die benötigte Anzahl von Rollformwerkzeugen und entsprechend auch der Aufwand in der Erprobungsphase und beim Umrüsten der Umformanlage.

Des weiteren ist es im Stand der Technik bislang recht aufwendig, Profile mit unterschiedlichen Wandstärken herzustellen. Gerade bei teuren Werkstoffen ist es jedoch oft erwünscht, die Wandstärke des Profils nur dort etwas dicker auszubilden, wo es aus Stabilitätsgründen notwendig ist.

Ein Verfahren zum Herstellen von Profilen mit unterschiedlichen bzw. variierenden Wandstärken mittels Rollformwerkzeugen aus einem Blechband ist aus der WO 00/29138 bekannt: Dort wird vorgeschlagen, zwei oder mehr Blechbänder unterschiedlicher Dicke in - beispielsweise aus der DE 40 22 062 C1 - bekannter Weise an ihren jeweiligen Längskanten aneinanderzusetzen und mittels Stumpfschweißen entlang ihrer Längskanten miteinander zu verbinden. Dieses Band wird dann in einer herkömmlichen Umformanlage mit Rollformwerkzeugen zu einem Profil mit variierender Wandstärke umgeformt. Dieses Verfahren tritt neben die früher üblichen Verfahren zur Herstellung von Profilen unterschiedlicher Wandstärke, wie Strangpressverfahren, Strangziehverfahren oder Walzverfahren.

Das aus der WO 00/29138 bekannte Verfahren ist jedoch nur für verhältnismäßig einfach geformte Profile einsetzbar. Außerdem müssen die einzelnen Blechbänder insbesondere in ihrer Höhe äußerst genau justiert Kante an Kante zusammengeführt und ebenso genau verschweißt werden, was einen erheblichen apparativen Aufwand mit sich bringt.

Der Erfindung liegt daher die Aufgabe zugrunde, ein Verfahren und eine Vorrichtung zum Herstellen eines Metallprofils mittels Rollformwerkzeugen vorzuschlagen, mit dem insbesondere Profile mit im Querschnitt variierenden Wandstärken mit geringerem Aufwand als bisher gefertigt werden können.

Diese Aufgabe ist durch ein Verfahren mit den Merkmalen des beigefügten Patentanspruchs 1 sowie durch eine Vorrichtung mit den Merkmalen des beigefügten Patentanspruchs 9 gelöst.

Vorteilhafte Weiterbildungen des Verfahrens ergeben sich aus den Patentansprüchen 2 bis 8; bevorzugte Ausgestaltungen der erfindungsgemäßen Vorrichtung sind in den Patentansprüchen 10 bis 16 niedergelegt.

Das erfindungsgemäße Verfahren ermöglicht beispielsweise, dass komplexe Profilformen durch Kombinieren und Zusammenschweißen einfacher Grundformen in ihrer Herstellung stark vereinfacht werden: Zum Beispiel kann eine bislang durch Umbiegen eines Blechbands hergestellte Doppelung des Profils durch Aufschweißen einer ebenen Platte auf ein einfaches Trägerprofil ersetzt werden. Die Anzahl der benötigten Rollformwerkzeuge verringert sich dabei drastisch.

Auch ein Profil mit variierender Wandstärke kann sehr einfach beispielsweise durch Aufschweißen eines entsprechend breiten Blechbandes auf ein schon fertig ausgeformtes Trägerprofil hergestellt werden.

Mit der erfindungsgemäß verwendeten Laserstrahlung kann die Schweißenergie besonders genau positioniert und ausgerichtet werden; auch die Regelung der in das Material eingebrachten Energiemenge ist mit einem Laser sehr genau und reproduzierbar möglich. Durch die seitliche Einbringung der Schweißenergie entlang der seitlichen Ränder der Kontaktfläche zwischen dem ersten Profil und dem zweiten Blechband bzw. Profil bleibt die Oberfläche der hierdurch hergestellten Verbundprofile im wesentlichen unbeeinflusst, zumal die Laserstrahlung bevorzugt im wesentlichen quer zur Transportrichtung des ersten Profils auf die Schweißstelle gerichtet wird und insofern durch Grenzenflächeneffekte von selbst in den Kontaktbereich zwischen den zu verschweißenden Bauteilen eindringt und die Bauteile flächig miteinander verschweißt. Hierzu ist es zweckmäßig, wenn die Laserstrahlung so auf die Schweißstelle gerichtet wird, dass sie mit der Kontaktfläche zwischen dem ersten Profil und dem zweiten Blechband bzw. Profil einen Winkel von 0° bis etwa 60° einschließt. Durch geeignete Wahl der Fokussierung und der eingebrachten Schweißenergiemenge kann dann sehr einfach erreicht werden, dass nicht nur die seitlichen äußersten Ränder der Kontaktfläche, sondern zumindest ein Teil der Kontaktfläche selbst verschweißt wird.

Ein besonderer, zusätzlicher und noch nicht dagewesener Vorteil des erfindungsgemäßen Verfahrens gegenüber dem bisher bekannten Stand der Technik ergibt sich dann, wenn das Verbundprofil aus Blechbändern und/oder Profilen mit jeweils unterschiedlichen Materialeigenschaften hergestellt werden. Beispielsweise kann ein Edelstahlband zu dem ersten Profil umgeformt werden und durch Aufschweißen eines Bandes aus Normalstahl verstärkt werden. Auch die Verwendung von unterschiedlich aufwendigen Aluminiumlegierungen zur Herstellung des erfindungsgemäßen Verbundprofils kann große Vorteile bieten. Die kostengünstige Herstellung von Spezialprofilen, bei denen unter Umständen nur ein Bereich des Querschnitts aus einer teueren Sonderlegierung bestehen muss, kann mit dem erfindungsgemäßen Verfahren leicht und schnell durchgeführt werden.

Allerdings soll darauf hingewiesen werden, dass das Wort "Verbundprofil" im Zusammenhang mit der hier beschriebenen Erfindung nicht eng auszulegen ist: Die miteinander verschweißten Profile bzw. das Profil und das Blechband können durchaus aus identischen Materialien und gegebenenfalls sogar identischen Formungen bestehen, ohne den Umfang der Erfindung zu verlassen.

Ein weiterer, enormer Vorteil des erfindungsgemäßen Verfahrens gegenüber dem bisher bekannten Stand der Technik ist es, dass Profile mit Stanzungen und/oder Aufbiegungen sehr viel einfacher und genauer als bisher mittels Rollumformtechnik hergestellt werden können: Bislang wurden die Stanzbilder entweder vor dem Umformen in das flache Blechband eingebracht, wobei die Stanzbilder beim Umformen oft in unerwünschter Weise deformiert wurden, oder aber die fertigen Profile mussten mit Stanzungen und gegebenenfalls Aufbiegungen versehen werden, was umgekehrt oft zu einer Deformation des Profils führte. Mit dem erfindungsgemäßen Verfahren können nun alle Stanz- und Biegeoperationen problemlos an einem flachen Blechband vorgenommen werden, das keinen Einformprozess durchläuft, sondern nach dem Formen des eigentlichen Trägerprofils diesem zugeführt und in der Schweißstation mit diesem verschweißt wird.

Beim Verschweißen ist es sinnvoll, das erste Profil und das zweite Blechband bzw. das zweite Profil mittels Führungsrollenpaaren zu positionieren. Für einige Anwendungen kann es auch vorteilhaft sein, wenn das durch Verschweißen entstandene Verbundprofil direkt nach der Schweißstation einer weiteren Umformanlage mit einer Mehrzahl von angetriebenen oder freilaufenden Rollformwerkzeugen zugeführt wird. In der ersten Umformanlage erfolgt dann also lediglich ein Einformen des ersten Profils, das dann in der Schweißstation mit einem Blechband oder einem weiteren Profil verbunden wird, wonach dann das Fertigformen des Verbundprofils in der weiteren Umformanlage erfolgt.

In der Schweißstation können selbstverständlich mehrere Blechbänder und/oder mehrere Profile mit dem ersten Profil verschweißt werden. Alternativ hierzu ist es auch möglich, in der Produktionslinie mehrere Schweißstationen vorzusehen.

Soweit nach dem erfindungsgemäßen Verfahren zwei bereits eingeformte Profile zu einem Verbundprofil verschweißt werden sollen, bietet es weitere Vorteile, wenn die Rollformwerkzeuge zum Einformen des zweiten Profils zumindest teilweise in jeweils denselben Gestellen gelagert sind, wie die Rollformwerkzeuge zum Einformen des ersten Profils. Solche Doppelgestelle für Rollformwerkzeuge sparen, wie unmittelbar auf der Hand liegt, Platz und erleichtern die Arbeit beim Justieren der Anlage. Des weiteren vereinfacht sich die notwendige Synchronisierung der Antriebe der jeweiligen Rollformwerkzeuge.

Die erfindungsgemäße Vorrichtung zur Durchführung des Verfahrens ist im Anspruch 9 definiert.

Um die Schweißenergie optimal in den Kontaktbereich der miteinander zu verschweißenden Teile einzubringen, sind die Laserschweißköpfe bevorzugt so angeordnet, dass die Laserstrahlen im wesentlichen quer zur Transportrichtung des ersten Profils auf die Schweißstelle gerichtet sind. Hierdurch wird die Schweißenergie seitlich in den Verbindungsbereich eingebracht, was insbesondere im Hinblick auf eine möglichst großflächige Schweißverbindung zwischen den beiden beteiligten Teilen Vorteile bietet. Sofern die Laserstrahlung so auf die Werkstücke aufgebracht wird, dass sie mit der Kontaktfläche zwischen dem ersten Profil und dem zweiten Blechband bzw. Profil einen Winkel von 0° bis etwa 60° einschließt, kann insbesondere die flächige Verbindung zwischen den beiden beteiligten Werkstücken alleine durch Erhöhen der Schweißenergie vergrößert werden.

Zweckmäßigerweise werden die bei einem Schweißvorgang beteiligten Blechbänder bzw. Profile im Bereich des betreffenden Laserschweißkopfs durch ein Rollenpaar geführt.

Zum Verschweißen zweier aus Blechbändern eingeformter Profile kann, wie oben bereits erwähnt, die Umformanlage mit einer Anzahl von Gestellen versehen sein, in denen jeweils über den Rollformwerkzeugen zum Einformen des ersten Profils auch Rollformwerkzeuge zum Einformen des zweiten Profils gelagert sind.

Ein Ausführungsbeispiel für eine erfindungsgemäße Vorrichtung sowie mehrere Anwendungsbeispiele des erfindungsgemäßen Verfahrens werden im folgenden anhand der beigefügten Zeichnungen näher beschrieben und erläutert. Es zeigen:
- Figur 1: eine schematische Seitenansicht einer erfindungsgemäßen Vorrichtung;
- Figur 2: eine schematische Draufsicht auf die Schweißstation einer erfindungsgemäßen Vorrichtung;
- Figur 3: eine perspektivische Ansicht eines erfindungsgemäß hergestellten Verbundprofils;
- Figur 4: den Querschnitt des Verbundprofils nach Figur 4 beim Verschweißen;
- Figur 5: eine perspektivische Ansicht eines anderen erfindungsgemäß hergestellten Verbundprofils;
- Figur 6: eine perspektivische Ansicht eines weiteren erfindungsgemäß hergestellten Verbundprofils.

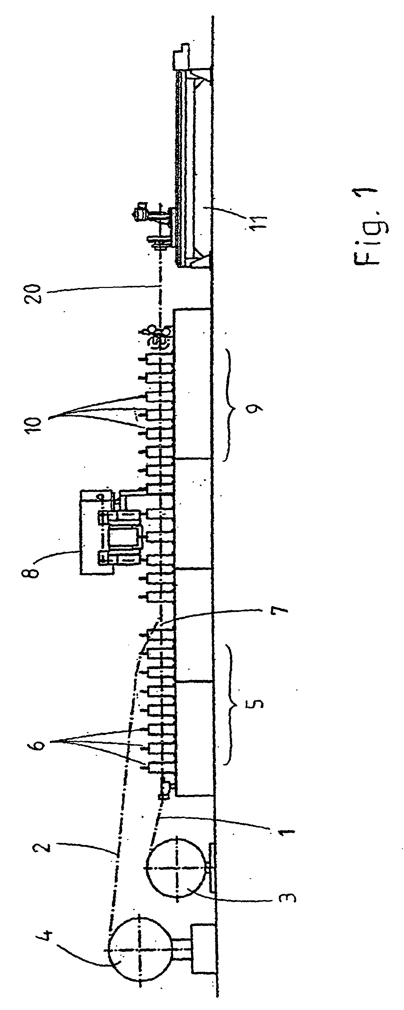

Figur 1 zeit den schematischen Aufbau eines Beispiels einer erfindungsgemäßen Vorrichtung: Ein erstes Blechband 1 und ein zweites Blechband 2 werden von einer ersten Abwickelhaspel 3 und einer zweiten Abwickelhaspel 4 abgewickelt. Das erste Blechband 1 wird zum Einformen eines Trägerprofils durch eine Umformanlage 5 mit einer Mehrzahl von Rollformwerkzeugen 6 geleitet. Nach der Umformanlage 5 wird das eingeformte erste Profil 7 mit dem zweiten Blechband 2 zusammengeführt und einer Schweißstation 8, bestehend aus einer Laserschweißanlage mit zwei Schweißköpfen, zugeführt. In der Schweißstation 8 wird das zweite Blechband 2 als Verstärkung auf eine Wand des ersten Profils 7 aufgeschweißt, wonach das entstandene Verbundprofil in einer weiteren Umformanlage 9 mit wiederum einer Mehrzahl von Rollformwerkzeugen 10 fertig geformt wird. Nach Verlassen der aus der ersten Umformanlage 5, der Schweißstation 8 und der weiteren Umformanlage 9 bestehenden Linie wird das "endlos" hergestellte Verbundprofil 20 in einer Trennmaschine 11 auf die gewünschte Länge abgelangt.

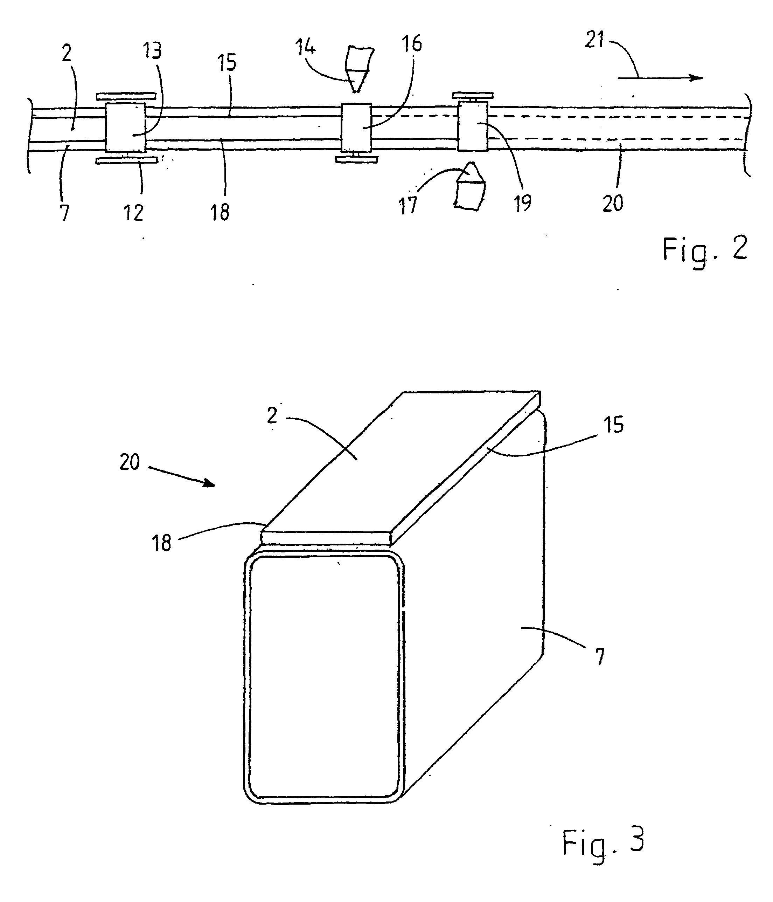

Figur 2 zeigt in schematischer Draufsicht die Schweißstation 8: Das erste Profil 7, von dem man nur die obere Wandung sieht, wird mittels eines angetriebenen, in einem Gestell 12 gelagerten Führungsrollenpaares 13 mit dem zweiten Blechband 2 zusammengeführt, und zwar derart, dass dieses flach auf der oberen Wandung des ersten Profils 7 aufliegt. Die Kontaktfläche zwischen dem ersten Profil 7 und dem zweiten Blechband 2 wird also durch die untere Oberfläche des zweiten Blechbands 2 definiert. Ein erster Laserschweißkopf 14 fokussiert einen Laserstrahl von der linken Seite auf die linke seitliche Begrenzung 15 der Kontaktfläche, während ein erstes Rollenpaar 16 das zweite Blechband 2 auf das erste Profil 7 aufpresst. Entsprechend fokussiert ein zweiter Laserschweißkopf 17 einen Laserstrahl auf den rechten Rand 18 der Kontaktfläche, während ein zweites Rollenpaar 19 wiederum das zweite Blechband 2 auf das erste Profil 7 presst. Auch bei möglichen inneren Spannungen des ersten Profils 7 und des zweiten Blechbands 2 ist also eine ununterbrochene Schweißnaht sichergestellt. Das in der Schweißstation entstandene Verbundprofil 20 verlässt die Schweißstation in Transportrichtung 21.

Figur 3 zeigt ein Stück des in den Figuren 1 und 2 hergestellten Verbundprofils 20, das aus dem ersten Profil 7 und dem auf dieses aufgeschweißten zweiten Blechband 2 zusammengesetzt ist. Das fertige Verbundprofil 20 weist in Zonen geringer Belastung also eine reduzierte Wandstärke und in der Zone hoher Belastung eine erhöhte Wandstärke auf. Hierdurch wird gegenüber gleich belastbaren, jedoch konventionell hergestellten Profilen eine deutliche Materialeinsparung erzielt. An dieser Stelle soll nochmals erwähnt werden, dass bei dem dargestellten Verbundprofil 20 durchaus auch unterschiedliche Materialien verwendet werden können: Beispielsweise kann das erste Profil 7 aus Edelstahl bestehen, das mit einem aus preiswertem Massenstahl bestehenden Blechband 2 an der Stelle verstärkt wurde, an der eine höhere Stabilität des Verbundprofils 20 erforderlich ist.

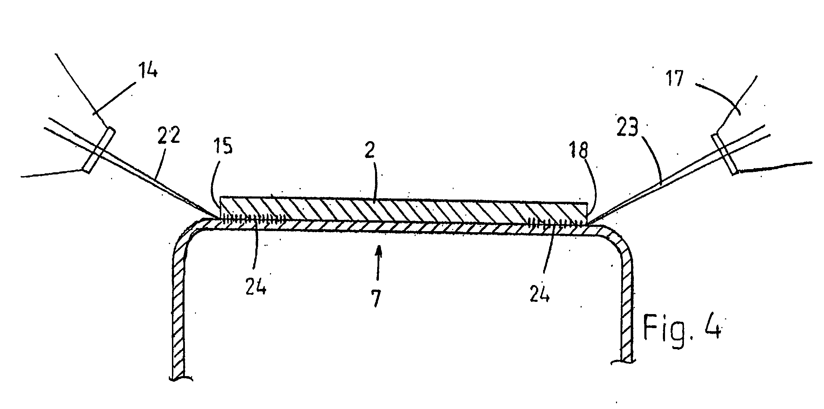

Figur 4 zeigt im Querschnitt die obere Hälfte des Verbundblechs 20, das in der Figur 3 dargestellt ist, während des Schweißvorgangs. Zur Verdeutlichung sind außerdem die Laserschweißköpfe 14 und 17 angedeutet. Der linke Rand 15 und der rechte Rand 18 des zweiten Blechbandes 2 begrenzen die Kontaktfläche zwischen dem ersten Profil 7 und dem zweiten Blechband 2. Die Laserstrahlen 22 und 23, die von den Laserschweißköpfen 14 und 17 ausgehen, sind exakt auf die Kontaktbereiche am linken Rand 15 und am rechten Rand 18 der Kontaktfläche ausgerichtet sowie in ihrer Energieeinstrahlung und in ihrem Einstrahlwinkel so eingestellt, dass die beiden Bauteile in den jeweils vom linken Rand 15 bzw. rechten Rand 18 ausgehenden, flächigen Bereichen 24 miteinander verschweißt werden.

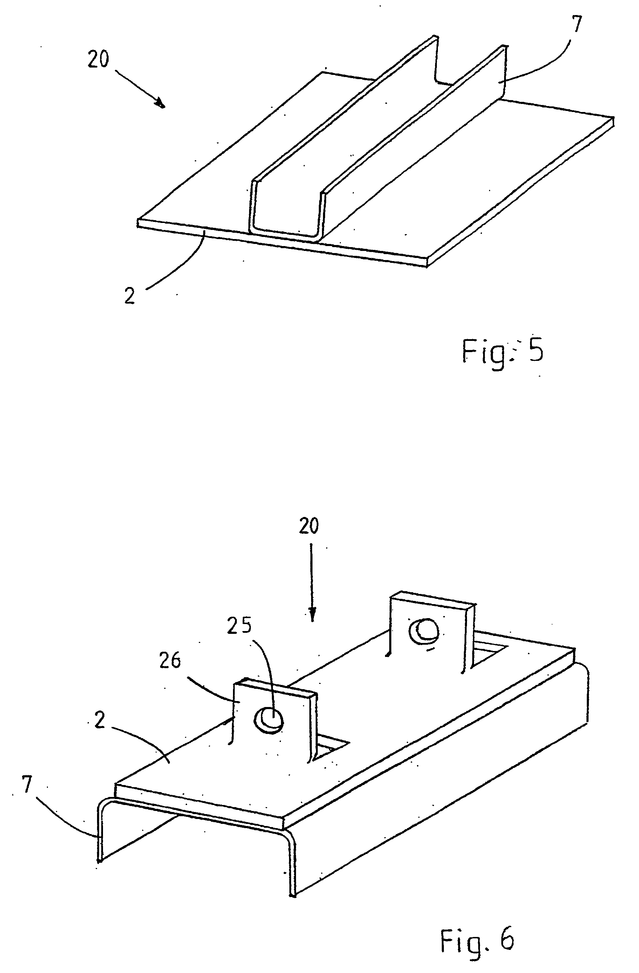

Figur 5 zeigt ein anderes Anwendungsbeispiel für das erfindungsgemäße Verfahren: Hier wurde auf das erste Profil 7 ein breites zweites Blechband 2 aufgeschweißt, wodurch sich im Ergebnis ein Verbundprofil 20 ergibt, dessen Form mit herkömmlicher Technik zwei-durch vollständiges Umbiegen herzustellende Verdoppelungen erfordert hätte. Die beiden im Verbundprofil 20 miteinander verschweißten Teilprofile bestehen jedoch lediglich aus einfachen und entsprechend einfach einzuformenden Grundformen. Das hier dargestellte Verbundprofil 20 kann gegebenenfalls in der weiteren Umformanlage 9 noch weiter bearbeitet werden.

Figur 6 zeigt schließlich ein drittes Anwendungsbeispiel für das erfindungsgemäße Verfahren: Hier wurde ein erstes Profil 7 mit einem zweiten Blechband 2 verschweißt, das zuvor mit einer Anzahl von Stanzungen 25 und Aufbiegungen 26 versehen wurde. Das Ergebnis ist ein als Verbundprofil 20 ausgebildetes Präzisionsbauteil ohne Deformationen der Stanzbilder oder der Profilform. Wie man hier sieht, können die durch die Stanzungen 25 und Aufbiegungen 26 hergestellten Funktionselemente ohne Rücksicht auf die letztendlich erforderliche Profildicke dimensioniert werden, was einen weiteren, erheblichen Vorteil gegenüber dem bisher bekannten Stand der Technik bietet. Auch hier ist nochmals zu erwähnen, dass das erste Profil 7 und das zweite Blechband 2 nicht aus demselben Material bestehen müssen.

Abschließend darf nochmals festgehalten werden, dass sich die Erfindung nicht auf die dargestellten Ausführungsbeispiele beschränkt, sondern auch das Zusammenführen und Miteinander-Verbinden von mehr als zwei Blechbändern bzw. Profilen, sowie verschiedenste Kombinationen von Abmessungen und Materialien bei den Blechbändern umfasst.

### Bezugszeichenliste

- 1: Blechband (erstes)
- 2: Blechband (zweites)
- 3: Abwickelhaspel (erste)
- 4: Abwickelhaspel (zweite)
- 5: Umformanlage
- 6: Rollformwerkzeuge
- 7: Profil (erstes)
- 8: Schweißstation
- 9: Umformanlage (weitere)
- 10: Rollformwerkzeuge (weitere)
- 11: Trennmaschine
- 12: Gestell
- 13: Führungsrollenpaar
- 14: Laserschweißkopf (erster)
- 15: linker Rand
- 16: Rollenpaar (erstes)
- 17: Laserschweißkopf (zweiter)
- 18: rechter Rand
- 19: Rollenpaar (zweites)
- 20: Verbundprofil
- 21: Transportrichtung
- 22: Laserstrahl (erster)
- 23: Laserstrahl (zweiter)
- 24: Kontaktbereiche
- 25: Stanzung
- 26: Aufbiegung

## Patentansprüche

1. Verfahren zum Herstellen eines Metallprofils (20), mit folgenden Verfahrensschritten:
- ein erstes Blechband (7) wird mittels einer Mehrzahl von angetriebenen oder freilaufenden Rollformwerkzeugen (6) zu einem ersten Profil mit einer Wand umgeformt,
- direkt anschließend an den Umformprozess durchläuft das erste Profil (7) eine Schweißstation (8),
- in der Schweißstation (8) wird ein zweites Blechband (2) oder ein zweites Profil (2) mit dem ersten Profil (7) zusammengeführt und flächig auf die Wand des erstens Profils aufgelegt,
- das erste Profil (7) und das flächig auf diese Wand des erstens Profils aufgelegte zweite Blechband (2) oder zweite Profil (2) werden beidseits entlang der seitlichen Ränder (15,18) der Kontaktfläche mittels Laserstrahlungen (22,23) längs zu einem Verbundprofil (20) verschweißt.

2. Verfahren nach Anspruch 1,
**dadurch gekennzeichnet,**
**dass** die Laserstrahlungen (22,23) im wesentlichen quer zur Transportrichtung des ersten Profils (7) auf die Schweißstelle gerichtet werden.

3. Verfahren nach Anspruch 2,
**dadurch gekennzeichnet**
**dass** die Laserstrahlungen (22,23) so auf die Schweißstelle (8) gerichtet wird, dass sie mit der Kontaktfläche zwischen dem ersten Profil (7) und dem zweiten Blechband (2) oder Profil (2) einen Winkel von 0° bis etwa 60° einschließen.

4. Verfahren nach einem der Ansprüche 1 bis 3,
**dadurch gekennzeichnet,**
**dass** das Verbundprofil (20) aus Blechbändern und/oder Profilen (2) mit jeweils unterschiedlichen Materialeigenschaften hergestellt wird.

5. Verfahren nach einem der Ansprüche 1 bis 4,
**dadurch gekennzeichnet,**
**dass** das zweite Blechband (2) oder das zweite Profil (2) vor dem Verschweißen mit Stanzungen und/oder Aufbiegungen versehen wird.

6. Verfahren nach einem der Ansprüche 1 bis 5,
**dadurch gekennzeichnet,**
**dass** das erste Profil (7) und das zweite Profil (2) zu einem Verbundprofil (20) verschweißt werden, wobei zuvor das zweite Profil (2) mittels einer Mehrzahl von Rollformwerkzeugen eingeformt wird, die zumindest teilweise in jeweils denselben Gestellen gelagert sind, wie die Rollformwerkzeuge zum Einformen des ersten Profils.

7. Verfahren nach einem der Ansprüche 1 bis 6,
**dadurch gekennzeichnet**
**dass** das Verbundprofil (20) nach dem Verschweißen eine weitere Umformanlage (9) mit einer Mehrzahl von angetriebenen oder freilaufenden Rollformwerkzeugen (10) durchläuft.

8. Verfahren nach einem der Ansprüche 1 bis 7,
**dadurch gekennzeichnet,**
**dass** in der Schweißstation (8) mehrere Blechbänder (2) und/oder mehrere Profile (2) mit dem ersten Profil (7) verschweißt werden.

9. Vorrichtung zur Durchführung des Verfahrens nach einem der Ansprüche 1 bis 8, umfassend:
- eine Umformanlage (5) mit einer Mehrzahl von angetriebenen oder freilaufenden Rollformwerkzeugen (6) zum Umformen eines ersten Blechbandes (1) zu einem ersten Profil (7),
- eine in Linie mit der Umformanlage (5) angeordnete und dieser nachfolgende Schweißstation (8),
- und, zwischen der Umformanlage (5) und der Schweißstation (8) und in Linie mit diesen, eine Zuführvorrichtung (12, 13) zum gemeinsamen Zuführen eines zweiten Blechbandes (2) oder eines zweiten Profils (2) mit dem ersten Profil (7) in die Schweißstation (8),
**dadurch gekennzeichnet, dass** die Schweißstation mit mindestens zwei Laserschweißköpfen (14, 17) ausgestattet ist, und dass
- eine Positioniereinrichtung (13, 16, 19) zum flächigen Aneinanderlegen des ersten Profils (7) und des zweiten Blechbandes (2) oder Profils (2) in der Schweißstation (8) vorgesehen ist,
- wobei die Laserschweißköpfe (14, 17) so angeordnet sind, dass sie das erste Profil (7) und das zweite Blechband (2) oder Profil (2) beidseits entlang der seitlichen Ränder (15, 18) der Kontaktfläche miteinander zu einem Verbundprofil (20) verschweißen.

10. Vorrichtung nach Anspruch 9,
**dadurch gekennzeichnet,**
**dass** die Laserschweißköpfe (14, 17) so angeordnet sind, dass die Laserstrahlungen (22, 23) im wesentlichen quer zur Transportrichtung (21) des ersten Profils (7) auf die seitlichen Ränder (15, 18) gerichtet sind.

11. Vorrichtung nach Anspruch 10,
**dadurch gekennzeichnet,**
**dass** die Laserstrahlungen (22, 23) mit der Kontaktfläche zwischen dem ersten Profil (7) und dem zweiten Blechband (2) oder Profil einen Winkel von 0° bis etwa 60° einschließen.

12. Vorrichtung nach einem der Ansprüche 9 bis 11,
**dadurch gekennzeichnet,**
**dass** die Blechbänder (1, 2) und/oder Profile (2,7) jeweils unterschiedliche Materialeigenschaften aufweisen.

13. Vorrichtung nach einem der Ansprüche 9 bis 12,
**dadurch gekennzeichnet,**
**dass** das zweite Blechband (2) oder das zweite Profil (2) Stanzungen (25) und/oder Aufbiegungen (26) aufweist.

14. Vorrichtung nach einem der Ansprüche 9 bis 13,
**dadurch gekennzeichnet,**
**dass** die Umformanlage (5) mit einer Anzahl von Gestellen versehen ist, die jeweils über den Rollformwerkzeugen (6) zum Einformen des ersten Profils (7) auch Rollformwerkzeuge zum Einformen des zweiten Profils aufweisen.

15. Vorrichtung nach einem der Ansprüche 9 bis 14,
**dadurch gekennzeichnet,**
**dass** in Linie nach der Schweißstation (8) eine weitere Umformanlage (9) mit einer Mehrzahl von angetriebenen oder freilaufenden Rollformwerkzeugen (10) angeordnet ist.

16. Vorrichtung nach einem der Ansprüche 9 bis 15,
**dadurch gekennzeichnet,**
**dass** in der Schweißstation (8) mehrere Blechbänder (2) und/oder mehrere Profile (2) mit dem ersten Profil (7) verschweißbar sind.

## Claims

1. Process for the production of a metal profile (20), having the following process steps:
- a first sheet metal strip (7) is formed into a first profile having a wall by means of a plurality of driven or freewheeling rollforming tools (6),
- immediately after the forming process the first profile (7) passes through a welding station (8),
- in the welding station (8) a second sheet metal strip (2) or a second profile (2) is brought together with the first profile (7) and placed in surface-to-surface contact with the wall of the first profile,
- the first profile (7) and the second sheet metal strip (2) or second profile (2) that has been placed in surface-to-surface contact with the wall of the first profile are welded together on both sides along the length of the side edges (15, 18) of the contact surface by means of laser beams (22, 23) to form a composite profile (20).

2. Process according to claim 1,
**characterised in that**
the laser beams (22, 23) are directed onto the weld site substantially transversely to the transport direction of the first profile (7).

3. Process according to claim 2,
**characterised in that**
the laser beams (22, 23) are so directed onto the weld site (8) that they enclose with the contact surface between the first profile (7) and the second sheet metal strip (2) or profile (2) an angle of from 0° to approximately 60°.

4. Process according to any one of claims 1 to 3,
**characterised in that**
the composite profile (20) is produced from sheet metal strips and/or profiles (2) each having different material properties.

5. Process according to any one of claims 1 to 4,
**characterised in that**
the second sheet metal strip (2) or the second profile (2) is provided with punched holes and/or bent-up portions prior to the welding.

6. Process according to any one of claims 1 to 5,
**characterised in that**
the first profile (7) and the second profile (2) are welded together to form a composite profile (20), the second profile (2) being shaped beforehand by means of a plurality of rollforming tools, at least some of which are mounted in the same stands as the respective rollforming tools for shaping the first profile.

7. Process according to any one of claims 1 to 6,
**characterised in that**
the composite profile (20), after being welded, passes through a further forming apparatus (9) having a plurality of driven or freewheeling rollforming tools (10).

8. Process according to any one of claims 1 to 7,
**characterised in that**
in the welding station (8) a plurality of sheet metal strips (2) and/or a plurality of profiles (2) are welded to the first profile (7).

9. Device for carrying out the process according to any one of claims 1 to 8, comprising:
- a forming apparatus (5) having a plurality of driven or freewheeling rollforming tools (6) for forming a first sheet metal strip (1) into a first profile (7),
- a welding station (8) arranged in line with and downstream of the forming apparatus (5),
- and, between the forming apparatus (5) and the welding station (8) and in line therewith, a feed device (12, 13) for feeding a second sheet metal strip (2) or a second profile (2) into the welding station (8) together with the first profile (7),
**characterised in that**
- the welding station is provided with at least two laser welding heads (14, 17), and
- a positioning device (13, 16, 19) is provided for placing the first profile (7) and the second sheet metal strip (2) or profile (2) in surface-to-surface contact with one another in the welding station (8),
- the laser welding heads (14, 17) being so arranged that they weld the first profile (7) and the second sheet metal strip (2) or profile (2) to one another on both sides along the side edges (15, 18) of the contact surface to form a composite profile (20).

10. Device according to claim 9,
**characterised in that**
the laser welding heads (14, 17) are so arranged that the laser beams (22, 23) are directed onto the side edges (15, 18) substantially transversely to the transport direction (21) of the first profile (7).

11. Device according to claim 10,
**characterised in that**
the laser beams (22, 23) enclose with the contact surface between the first profile (7) and the second sheet metal strip (2) or profile an angle of from 0° to approximately 60°.

12. Device according to any one of claims 9 to 11,
**characterised in that**
the sheet metal strips (1, 2) and/or profiles (2, 7) each have different material properties.

13. Device according to any one of claims 9 to 12,
**characterised in that**
the second sheet metal strip (2) or the second profile (2) has punched holes (25) and/or bent-up portions (26).

14. Device according to any one of claims 9 to 13,
**characterised in that**
the forming apparatus (5) is provided with a number of stands having, above the respective rollforming tools (6) for shaping the first profile (7), also rollforming tools for shaping the second profile.

15. Device according to any one of claims 9 to 14,
**characterised in that**
in line after the welding station (8) there is arranged a further forming apparatus (9) having a plurality of driven or freewheeling rollforming tools (10).

16. Device according to any one of claims 9 to 15,
**characterised in that**
in the welding station (8), a plurality of sheet metal strips (2) and/or a plurality of profiles (2) can be welded to the first profile (7).

## Revendications

1. Procédé pour fabriquer un profilé métallique (20), comprenant les étapes suivantes :
- une première bande de tôle (7) est transformée en un premier profilé doté d'une paroi à l'aide de plusieurs outils de formage par roulage (6) entraînés ou tournant librement,
- directement après le processus de formage, le premier profilé (7) traverse un poste de soudure (8),
- dans le poste de soudure (8), une seconde bande de tôle (2) ou un second profilé (2) est associé(e) au premier profilé (7) et est posé(e) à plat sur la paroi du premier profilé,
- le premier profilé (7) et la seconde bande de tôle (2) ou le second profilé (2) posé à plat sur la paroi du premier profilé sont soudés longitudinalement, de part et d'autre, le long des bords latéraux (15,18) de la surface de contact au moyen de rayons laser (22, 23) afin de former un profilé composite (20).

2. Profilé selon la revendication 1, **caractérisé en ce que** les rayons laser (22, 23) sont dirigés sur le point de soudure essentiellement transversalement à la direction de transport du premier profilé (7).

3. Procédé selon la revendication 2, **caractérisé en ce que** les rayons laser (22, 23) sont dirigés sur le point de soudure (8) de telle sorte qu'ils forment avec la surface de contact entre le premier profilé (7) et la seconde bande de tôle (2) ou le second profilé (2) un angle compris entre 0° et 60° environ.

4. Procédé selon l'une des revendications 1 à 3, **caractérisé en ce que** le profilé composite (20) est fabriqué à partir de bandes de tôle et/ou de profilés (2) qui sont chacun(e) constitué(e)s de matériaux de nature différente.

5. Procédé selon l'une des revendications 1 à 4, **caractérisé en ce que** la seconde bande de tôle (2) ou le second profilé (2) est muni(e), avant la soudure, de découpes et/ou de découpes partielles repliées.

6. Procédé selon l'une des revendications 1 à 5, **caractérisé en ce que** le premier profilé (7) et le second profilé (2) sont soudés entre eux de manière à former un profilé composite (20), sachant qu'auparavant, le second profilé (2) a été formé au moyen de nombreux outils de formage par roulage qui sont au moins en partie montés dans les mêmes bâtis que les outils de formage par roulage pour former le premier profilé.

7. Procédé selon l'une des revendications 1 à 6, **caractérisé en ce que** le profilé composite (20) traverse après la soudure une installation de formage supplémentaire (9) qui est équipée de nombreux outils de formage par roulage entraînés ou tournant librement (10).

8. Procédé selon l'une des revendications 1 à 7, **caractérisé en ce que**, dans le poste de soudure (8), plusieurs bandes de tôle (2) et/ou plusieurs profilés (2) sont soudé(e)s sur le premier profilé (7).

9. Dispositif pour mettre en oeuvre le procédé selon l'une des revendications 1 à 8, comprenant :
- une installation de formage (5) comprenant de nombreux outils de formage par roulage entraînés ou tournant librement (6) pour transformer une première bande de tôle (1) en un premier profilé (7),
- un poste de soudure (8) disposé dans l'alignement de l'installation de formage (5) et à la suite de cette dernière,
- et, entre l'installation de formage (5) et le poste de soudure (8), et dans l'alignement de ceux-ci, un dispositif d'amenée (12, 13) pour amener une seconde bande de tôle (2) ou un second profilé (2) en même temps que le premier profilé (7) dans le poste de soudure (8),
**caractérisé en ce que** le poste de soudure est équipé d'au moins deux têtes de soudage au laser (14, 17), et **en ce qu'**est prévu un dispositif de positionnement (13, 16, 19) pour poser à plat l'un sur l'autre le premier profilé (7) et la seconde bande de tôle (2) ou le second profilé (2) dans le poste de soudure (8), sachant que les têtes de soudage au laser (14, 17) sont disposées de telle manière qu'elles soudent le premier profilé (7) et la seconde bande de tôle (2) ou le second profilé (2) de part et d'autre, le long des bords latéraux (15,18) de la surface de contact afin de former un profilé composite (20).

10. Dispositif selon la revendication 9, **caractérisé en ce que** les têtes de soudage au laser (14, 17) sont disposées de telle sorte que les rayons laser (22, 23) soient dirigés sur les bords latéraux (15, 18) essentiellement transversalement à la direction de transport (21) du premier profilé (7).

11. Dispositif selon la revendication 10, **caractérisé en ce que** les rayons laser (22, 23) forment avec la surface de contact entre le premier profilé (7) et la seconde bande de tôle (2) ou le second profilé (2) un angle compris entre 0° et 60° environ.

12. Dispositif selon l'une des revendications 9 à 11, **caractérisé en ce que** les bandes de tôle (1, 2) et/ou les profilés (2, 7) sont composé(e)s de matériaux qui sont chaque fois de nature différente.

13. Dispositif selon l'une des revendications 9 à 12, **caractérisé en ce que** la seconde bande de tôle (2) ou le second profilé (2) présente des découpes (25) et/ou des découpes partielles repliées (26).

14. Dispositif selon l'une des revendications 9 à 13, **caractérisé en ce que** l'installation de formage (5) est équipée d'un certain nombre de bâtis qui présentent chaque fois au-dessus des outils de formage par roulage (6) destinés à former le premier profilé (7) des outils de formage par roulage destinés à former le second profilé.

15. Dispositif selon l'une des revendications 9 à 14, **caractérisé en ce qu'**en aval du poste de soudure (8), dans l'alignement de celui-ci, est placée une installation de formage supplémentaire (9) dotée de plusieurs outils de formage par roulage entraînés ou tournant librement (10).

16. Dispositif selon l'une des revendications 9 à 15, **caractérisé en ce que**, dans le poste de soudure (8), plusieurs bandes de tôle (2) et/ou plusieurs profilés (2) peuvent être soudé(e)s avec le premier profilé (7).
